(19) Europäisches Patentamt
European Patent Office
Office européen des brevets

(11) **EP 3 381 015 B1**

(12) **EUROPEAN PATENT SPECIFICATION**

(45) Date of publication and mention
of the grant of the patent:
**20.11.2019 Bulletin 2019/47**

(21) Application number: **16804886.6**

(22) Date of filing: **25.11.2016**

(51) Int Cl.:
***G06T 7/586*** *(2017.01)*

(86) International application number:
**PCT/GB2016/053719**

(87) International publication number:
**WO 2017/089826 (01.06.2017 Gazette 2017/22)**

(54) **SYSTEMS AND METHODS FOR FORMING THREE-DIMENSIONAL MODELS OF OBJECTS**

SYSTEME UND VERFAHREN ZUR HERSTELLUNG DREIDIMENSIONALER MODELLE VON GEGENSTÄNDEN

SYSTÈMES ET PROCÉDÉS PERMETTANT DE FORMER DES MODÈLES D'OBJETS EN TROIS DIMENSIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2015 GB 201520953**

(43) Date of publication of application:
**03.10.2018 Bulletin 2018/40**

(73) Proprietor: **Fuel 3D Technologies Limited**
**Chinnor, Oxfordshire OX39 4HA (GB)**

(72) Inventors:
• **LARKINS, Andrew Henry John**
**Newbury**
**Berkshire RG14 1RU (GB)**
• **DENDY, William Richard**
**Oxford**
**Oxfordshire OX2 6QJ (GB)**

(74) Representative: **Watkin, Timothy Lawrence**
**Harvey**
**Marks & Clerk LLP**
**Fletcher House**
**The Oxford Science Park**
**Heatley Road**
**Oxford OX4 4GE (GB)**

(56) References cited:
**WO-A1-2009/122200     WO-A1-2014/187917**

## Description

Field of the invention

The present invention relates to an imaging system for generating three-dimensional (3D) models of a 3D object from two dimensional images, and a method performed by the imaging system.

Background of the invention

Modelling of 3D surfaces using two-dimensional images has been a major research topic for many years. The 3D surface is illuminated by light (or other electromagnetic radiation), and the two-dimensional images are created using the light reflected from it.

Most real objects exhibit two forms of reflectance: specular reflection (particularly exhibited by glass or polished metal) in which, if incident light (visible light or other electromagnetic radiation) strikes the surface of the object in a single direction, the reflected radiation propagates in a very narrow range of angles; and Lambertian reflection (exhibited by diffuse surfaces, such as matte white paint) in which the reflected radiation is isotropic with an intensity according to Lambert's cosine law (an intensity directly proportional to the cosine of the angle between the direction of the incident light and the surface normal). Most real objects have some mixture of Lambertian and specular reflective properties.

Recently, great progress has been made in imaging three-dimensional surfaces which exhibit Lambertian reflective properties by means of photometry (the science of measuring the brightness of light). For example, WO 2009/122200 A1, "3D Imaging System" describes a system in which, in preferred embodiments, the object is successively illuminated by at least three directional light sources, and multiple cameras at spatially separated positions capture images of the object. If the object is expected to move relative to the imaging system during the imaging process, a localization template, fixed to the object, is provided in the optical fields of all the light sensors, to allow the images to be registered with each other, in a frame of reference in which the object is unmoving.

Typically, the object will have a number of "landmarks" which, when imaged, produce features which can be recognized in each of the images. Consider two images (a "stereo pair" of images) which are captured simultaneously respectively by two or more of the cameras which have a known geometric relationship. For each of a number of landmarks (such as marks on the surface, or places where there is a color transition), the system determines the corresponding positions in the stereo pair of images of the corresponding features. Using this data, an initial 3D model of the object is created stereoscopically (i.e. by optical triangulation).

Photometric data is generated from images captured at different times when successive ones of the directional light sources are activated. If the object is moving relative to the cameras during this period, the images are registered using the localization template (i.e. such that the respective viewpoints are known in a common reference frame in which the object is stationary). On the assumption that the object exhibits Lambertian reflection, the photometric data makes it possible to obtain an estimate of the normal direction to the surface of the object with a resolution comparable to individual pixels of the image. The normal directions are then used to refine the initial model of the 3D object.

Problems may arise due to the "near far" effect, in that areas of the object which are further from the light sources are lit less well than areas which are closer. This leads to lighting with a high dynamic range. In any area of the object which is relatively darker, the variations of intensity due to variations in the normal direction are correspondingly lower, leading to less accurate results.

For example, if a given captured image contains both bright areas and dark areas, and if the intensity of any given pixel is expressed as, say, an 8-bit number, then the small absolute difference in intensity between different pixels in the darker areas of the image, will be expressed inaccurately. This limits the useful range of the photometric system.

A further problem is that typically the object is illuminated not only by the directional energy sources but by ambient light, which propagates in a direction which is not known and with unknown intensity. Thus, the light collected when one of the light sources is activated is subject to a background noise. This reduces the accuracy of the photometry. The noise due to the ambient light can be reduced by making the light sources much brighter than the ambient light, but this can lead to areas of the collected images which are over-exposed because the object brightly reflects the light from the light sources. Over-exposure means that the intensity value of each pixel of the image does not accurately express the intensity of reflected light, leading to further problems for the photometry.

Finally, WO 2014/187917 A1 discloses computing a ratio between pixel values coming from first! images, to determine if pixels are brighter or darker than a reference. WO 2014/187917 A1 does not mention adjusting the lighting, acquiring second images and to build a 3D model.

Summary of the invention

The present invention aims to provide new and useful methods and systems for obtaining three-dimensional (3D) models of a 3D object, and displaying images of the models.

The scope of the invention is defined by claims 1 and 8.

In general terms the invention proposes a 3D modelling system in which an object is illuminated by electromagnetic radiation generated by at least one directional energy source (typically successively) from at least three directions. The directional energy source(s) are controlled to emit energy at different respective intensities at different times. For each direction, at least one image of the object is captured at each of multiple corresponding light intensities. The images captured when the object is illuminated in one of the directions by the at least one energy source are here referred to as "captured images".

Using first images captured from each of the respective directions when the object is illuminated with a respective first intensity, an energy intensity ratio is obtained. The energy intensity ratio is used to obtain a respective second intensity level for each of the directions, and the object is then imaged when illuminated from each of the directions at the respective second intensity. Note that the first intensity may be the same for each of the respective directions, and if so, the second intensity is the same for each of the respective directions.

The multiple images of the object when the object is illuminated from each direction provide high dynamic range data about the propensity of points on the object to reflect light propagating in the corresponding direction.

Note that the problem of imaging a visual field which has wide variation in brightness (i.e. high dynamic range) is not unique to the field of 3D modeling using photometry. It appears also in the field of photographing scenes with an HDR, to produce visually pleasing two-dimensional images. In that field, the conventional way to address HDR is tone mapping, in which the camera converts light intensities in the scene into pixel intensities in the image using a non-linear mapping. Thus, dark areas of the scene with relatively low levels of variation in absolute intensity appear in the image as regions with a higher range of pixel intensities. Some camera systems include tone mapping as a standard feature. However, the present inventors have realized that using tone mapped data for photometric 3D modeling of an object would result in distortions in the reconstructed 3D model, because the pixel intensities would not be proportional to the intensity of light reflected from the object.

Another conventional way of addressing HDR is by capturing images of the visual field with two or more different exposure times: a long exposure image in which the areas corresponding to the brightest parts of the visual field are over-exposed; and a short exposure image in which the areas corresponding to the darkest parts of the visual field are almost black. The two images are merged into a single image by tone mapping, so that areas of the merged image corresponding to dark areas of the visual field tend to be similar to the long exposure image, while areas of the merged image corresponding to bright areas of the visual field tend to be similar to the short exposure image. However, this too leads to a non-linear relationship between brightness in the visual field and brightness in the merged image, which leads to distortions in the 3D modelling based on photometry. Furthermore, the long exposure image will include more ambient light, which also leads to a reduction in the quality of the 3D model. By contrast, in the present invention, all images for a given directional energy source may be captured with a substantially similar exposure time, so that ambient light affects all equally.

Note furthermore that since the areas of the object which are brightest will be different according to the direction from which the object is illuminated, conventional techniques for dealing with HDR will operate differently for each direction. That is, the tone mapping function would be different for different ones of the directions. This inconsistency would lead to additional errors when the images for the different directions are used together for the 3D modeling by photometry.

By contrast, the present invention makes possible imaging in which, for a given illumination direction, accurate reflectivity values are obtained for both the bright and dark areas of the object. Preferably two images are captured for each direction. Preferably no tone mapping is applied to either image: in each image the intensity level of each pixel is directly proportional to the brightness of the corresponding area of the object (metrically accurate luminance).

Furthermore, since, for each direction, the ratio of the respective brightness levels of the brightest image and the darkest image is the same, the images for different ones of the directions can be obtained in a consistent way.

Preferably, for each direction, a respective first image is captured when the energy source has a relatively low intensity (a "low intensity image"). The low intensity images for the various directions are used to obtain the energy intensity ratio. A respective second image is then captured for each direction using a higher "optimized" intensity, which is higher than the low intensity by the energy intensity ratio. This allows the optimized intensity value to be chosen to make a preferred trade-off between the need for the intensity value to be high enough to sufficiently illuminate the darker areas of the object, and the desirability of avoiding over-exposure.

An appropriate selection of the higher intensity value makes it possible to minimize the total number of images which have to be taken for each of the directions to ensure that all areas of the object are imaged in at least one of the captured images with a pixel intensity which is an accurate expression of their brightness. Reducing the number of images captured for each direction reduces the amount of data processing required to analyze them. Furthermore, it reduces the time taken to capture the images, and thus the risk that the object moves relative to the imaging system during the imaging. From another point of view, it makes it easier to correct the images for relative motion of the object and imaging system during the imaging process.

Preferably, in addition to images captured when the directional energy source(s) are illuminated, the imaging system captures at least one image when the directional energy source(s) are not illuminated and the object is lit only by ambient light. The intensity of this "ambient light image" can be used to correct the images captured when the directional energy source(s) are illuminated, thereby removing the effect of the ambient light. This can be done simply by subtracting the ambient light image from the captured images, since the captured images have pixel intensities which are directly proportional to the intensity of the light transmitted by the corresponding areas of the object.

Preferably, the photometric information obtained from the images captured when the object is illuminated from the successive directions, is used to provide fine detail to improve an initial 3D model obtained in another way. As in WO 2009/122200 A1, the initial 3D model may be obtained by stereoscopy, using at least a stereo pair of images of the object captured from different viewpoints (for example simultaneously). Alternatively, it may be obtained by a depth camera. Known types of depth camera include those using sheet-of-light triangulation, structured light (that is, light having a specially designed light pattern), time-of-flight or interferometry.

As mentioned above, the object is preferably illuminated successively by the energy source(s) in at least three directions. This is done with the low intensity first, and then with the high intensity. If this is done, the energy source(s) may emit light of the same frequency spectrum (e.g. if the energy is visible light, the directional light source(s) may each emit white light, and the captured images may be color images). However, in principle, for either or both of the intensity levels, the object could alternatively be illuminated in at least three directions by energy source(s) which emit energy with different respective frequency spectra (e.g. in the case of visible light, the directional light source(s) may respectively emit red, white and blue light). In this case, the directional energy source(s) could be activated simultaneously (once at the low intensity and once at the high intensity), if the energy sensors are able to distinguish the energy spectra. For example, the energy sensor(s) might be adapted to record received red, green and blue light separately. That is, the red, green and blue light channels of the captured images would be captured simultaneously, and would respectively constitute the images in which the object is illuminated in a single direction. However, this second possibility is not preferred, because coloration of the object may lead to incorrect photometric imaging.

Although photometric imaging requires that the object is illuminated from at least three directions, the number of directions may be higher than this. The timing of the activation of the energy source(s) and energy sensor(s) may be controlled by a processor, which may also calculate relative motion of the object and energy sensor(s), and compensate for it.

In principle, there could be only one directional energy source which is moved to as to successively illuminate the object from successive directions.

However, typically at least three energy sources are provided, for illuminating the object from respective directions. It would be possible for these sources to be provided as at least three energy outlets from an illumination system in which there are fewer than three elements which generate the energy. For example, there could be a single energy generation unit (light generating unit) and a switching unit which successively transmits energy generated by the single energy generation unit to respective input ends of at least three energy transmission channels (e.g. optical fibers). The energy would be output at the other ends of the energy transmission channels, which would be at three respective spatially separately locations. Thus the output ends of the energy transmission channels would constitute respective energy sources. The light would propagate from the energy sources in different respective directions.

The at least three directional energy sources may be provided in a plane perpendicular to a line of sight of one of the energy sensors, and symmetrically arranged around that line of sight. Optionally, an additional directional energy source may provided close to at least one of the energy sensor(s). This provides "bright field" lighting, i.e. ensuring that the whole of the object which is visible to the at least one energy sensor is lit to some extent, so that there are no completely dark regions.

Once constructed, the 3D model of the object may be displayed using a screen, which typically shows the 3D model from a certain perspective, with certain coloring and texture. The coloring and texture may be derived from at least some of the captured images (the images taken when the object is illuminated by one of the directional energy sources). This may include compensating intensity in the captured images to take into account the distance of any point in the model from the corresponding directional energy source (i.e. compensating for the near-far effect). Thus, the intensity of a pixel in the displayed image of the model corresponding to a point of the model may be represented with a brightness which is derived using the images captured by the directional energy source(s) but compensated by a compensation factor which is obtained by: calculating the distance of the point in the model from the energy source(s), and calculating the compensation factor based on the distance (for example, the compensation factor may be the square of the distance, which compensates for the usual inverse square diminution of brightness with distance).

If desired, the dynamic range of the intensity of pixels in the representation of the 3D model may be reduced by one of the techniques explained above in relation to two-dimensional imaging, such as tone mapping.

The energy used is electromagnetic radiation, i.e. light. The term "light" is used in this document to include electromagnetic radiation which is not in the visible spectrum. Various forms of directional energy source may be used in embodiments of the invention. For example, a standard photographic flash, a high brightness LED cluster, or Xenon flash bulb or a 'ring flash'. It will be appreciated that the energy need not be in the visible light spectrum. One or more of the energy sources may be configured to generate light in the infrared (IR) spectrum (wavelengths from 900nm to 1mm) or part of the near infrared spectrum (wavelengths from 900nm to 1100nm). Optionally, the energy may be polarized.

Where visible-light directional energy is applied, then the energy sensors may be two or more standard digital cameras, or video cameras, or CMOS sensors and lenses appropriately mounted. In the case of other types of directional energy, sensors appropriate for the directional energy used are adopted. A discrete energy sensor may be placed at each viewpoint, or in another alternative a single sensor may be located behind a split lens or in combination with a mirror arrangement.

The energy sources and energy sensors preferably have a known positional relationship, which is typically fixed. The energy sensor(s) and energy sources may be incorporated in a portable apparatus, such as a hand-held instrument. Alternatively, the energy sensor(s) and energy sources may be incorporated in an apparatus which is mounted in a building.

The invention may be expressed as an apparatus for capturing images, including a processor for analyzing the images according to program instructions (which may be stored in non-transitory form on a tangible data storage device). Alternatively, it may be expressed as the method carried out by the apparatus.

The project leading to this patent application has received funding from the European Union's Horizon 2020 research and innovation programme under grant agreement No 710384.

Brief description of the drawings

An embodiment of the invention will now be described for the sake of example only with reference to the following figures in which:

Fig. 1 shows a first schematic view of an imaging assembly for use in an embodiment of the present invention to form a 3D model of an object, including multiple image capturing devices;

Fig. 2 is a view of the object from the opposite direction from Fig. 1;

Fig. 3 is a flow diagram of a method which is an embodiment of the invention; and

Fig. 4 illustrates an embodiment of the invention incorporating the imaging assembly of Fig. 1 and a processor.

Detailed description of the embodiments

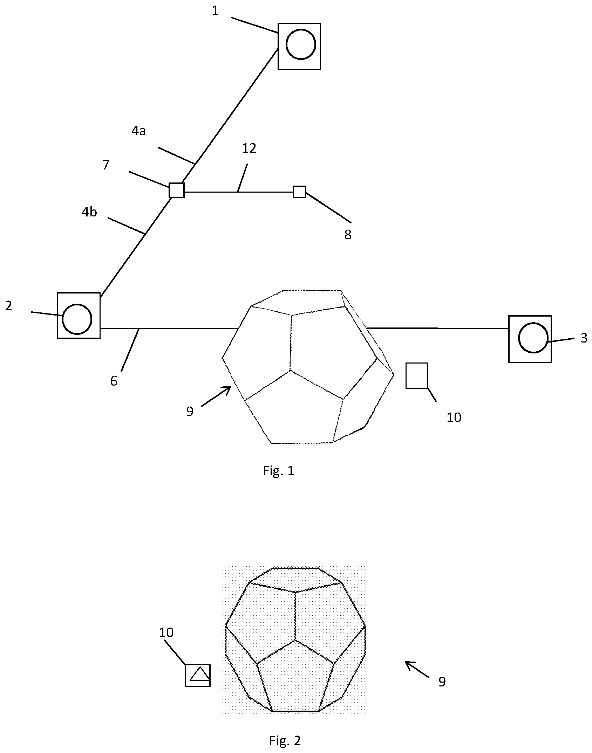

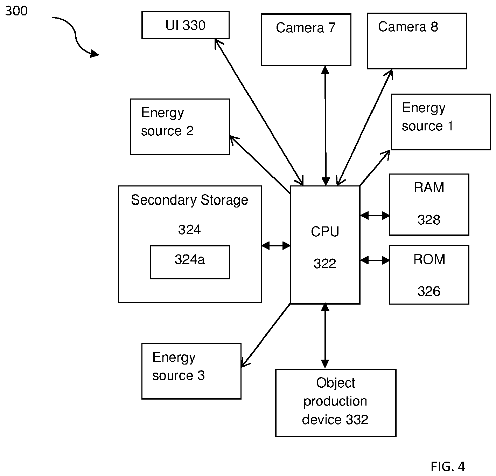

Referring firstly to Fig. 1, an imaging assembly is shown which is a portion of an embodiment of the invention. The imaging assembly includes directional energy sources 1, 2, 3. It further includes energy sensors 7, 8 in form of image capturing devices. The image capturing devices capture color images, i.e. intensity values at each pixel for each of three colors. The energy sources 2, 3 are fixedly mounted to each other by a strut 6. The image capturing device 7 is fixedly mounted to the energy source 1 by the strut 4a, to the energy source 2 by strut 4b, and to the image capturing device 8 by the strut 12. The exact form of the mechanical connection between the energy sources 1, 2, 3 is different in other forms of the invention, but it is preferable if it maintains the energy sources 1, 2, 3 and the imaging devices 7, 8 at fixed distances from each other and at fixed relative orientations. Preferably, the energy sources 1, 2, 3 are symmetrical about (i.e. at equal angular positions around) the imaging device 8. The energy sources 1, 2, 3 may be substantially co-planar, in a plane perpendicular to the imaging direction of the imaging device 8. The energy sources 1, 2, 3 and image capturing devices 7, 8 may be incorporated in a portable, hand-held instrument. In addition to the imaging assembly shown in Fig. 1, the embodiment includes a processor 322 (not shown in Fig. 1) which is in electronic communication with the energy sources 1, 2, 3 and image capturing devices 7, 8. This is described below in detail with reference to Fig. 4.

The energy sources 1, 2, 3 are each adapted to generate electromagnetic radiation ("light"), such as visible light or infra-red radiation. The energy sources 1, 2, 3 and image capturing devices 7, 8, are all controlled by the processor. The output of the image capturing devices 7, 8 is transmitted to the processor. The energy sources 1, 2, 3 are powered by a power supply (not shown) which may include a capacitor for accumulating charge during the time before the energy sources are activated.

Each of the image capturing devices 7, 8 is arranged to capture an image of an object 9 positioned in both the respective fields of view of the image capturing devices 7, 8. The image capturing devices 7, 8 are spatially separated, and preferably also arranged with converging fields of view, so the apparatus is capable of capturing two images of the object 9 from two separated viewpoints (a "stereo pair" of images), so that stereoscopic imaging of the object 9 is possible. Note that the images captured are typically color images, having a separate intensity for each pixel each of three color channels. In this case, the three channels are treated separately in the process described below. Alternatively, in variations of the embodiment, the three color channels could be combined together into a single channel (i.e. by at each pixel summing the intensities of the channels), or, in principle, two of the channels could be discarded.

The case of two viewpoints is often referred to as a "stereo pair" of images, although it will be appreciated that in variations of the embodiment more than two spatially-separated image capturing devices may be provided, so that the object 9 is imaged from more than two viewpoints. This may increase the precision and/or visible range of the apparatus. The words "stereo" and "stereoscopic" as used herein are intend to encompass, in addition to the possibility of the subject being imaged from two viewpoints, the possibility of the subject being imaged from more than two viewpoints.

Suitable image capture devices for use in the invention include the 1/3-Inch CMOS Digital Image Sensor (AR0330) provided by ON Semiconductor of Arizona, US.

Fig. 2 shows schematically how the object 9 looks as viewed which is opposite to the viewing direction of Fig. 1. This is the direction in which the image capturing devices 7, 8 face. As shown in both Figs. 1 and 2, a localization template 10 is present in the visual field of both the image capturing devices 7, 8, and in a substantially fixed positional relationship with the object 9. The localization template 10 is useful, though not essential, for registering the images in relation to each other, particularly in the case that the object 9 may move relative to the image capturing devices 7,8 during the imaging process. Since the localization template 10 is in the visual field of both the image capturing devices 7, 8, it appears in all the images captured by those devices, and it is provided with a known pattern, so that the processor is able to identify it from the image, and from its position, size and orientation in any given one of the images, reference that image to a coordinate system defined in relation to the localization template 10. In this way, all images captured by the image capturing devices 7, 8 can be referenced to that coordinate system. If the object 9 moves slightly between the respective times at which any two successive images are captured, the localization template 10 will move correspondingly, so the object 9 will not have moved in the coordinate system. In variations of the embodiment in which the positional relationship of the energy sources 1, 2, 3 and image capturing devices 7, 8 is not known, it may be determined if the energy sources 1, 2, 3 illuminate the localization template 10. Note that if the object 9 is known to be stationary relative to the imaging system, the localization template 10 may be unnecessary. In other embodiments of the invention in which the object 9 may move relative to the imaging system, the images captured by image capturing devices 7, 8 may be mutually registered in other ways, such as identifying in each image landmarks of the object 9, and using these landmarks to register the images with each other.

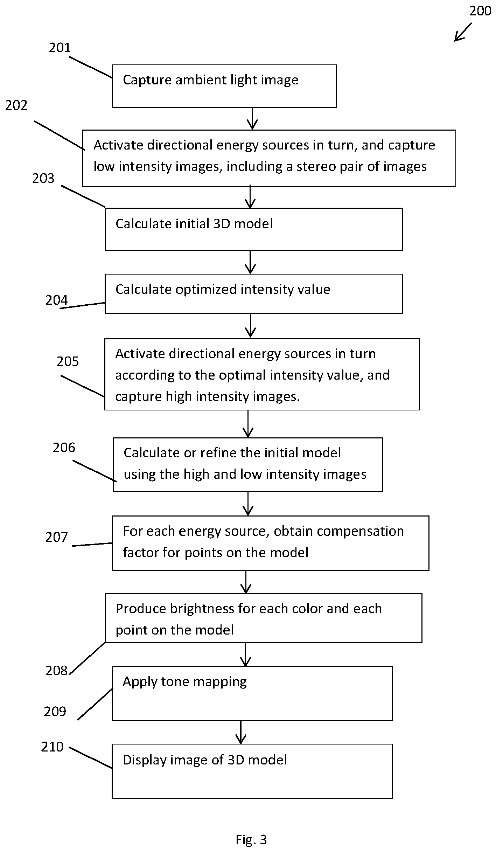

Turning to Fig. 3 a method 200 is shown which employs the imaging assembly of Fig. 1. In step 201 of method 200 the processor controls the image capturing device 8 capture an image of the object 9 at a time when the energy sources 1, 2, 3 are all turned off (an "ambient light image").

In step 202, each of the energy sources 1, 2, 3 is successively activated to generate energy. This is done with a first energy intensity. Supposing that the power supply has accumulated an energy denoted by 3E (that is, energy E for each of the energy sources 1, 2, 3), the first energy intensity is chosen such that less than half of the energy is expended. For example, the first energy intensity may be chosen such that about 20% of energy E is supplied to each of the energy sources 1, 2, 3.

While each of the energy sources 1, 2, 3 is activated successively, the image capturing device 8 captures three respective first images (referred to here as "low intensity images"). While one of the low intensity images is being captured, the image capturing device 7 also captures an image, so that a stereo pair of simultaneously captured images is created. Note that in a variation of the embodiment, step 202 can be performed before step 201, or step 201 can be performed mid-way through step 202, i.e. when some but not all of the lower intensity images have been captured.

In optional step 203, the processor uses the stereo pair of images geometrically, e.g. by the same stereoscopic algorithm employed in WO 2009/122200 A1, to produce an initial 3D model of the object 9. This is based around known principles of optical parallax. This technique generally provides good unbiased low-frequency information (the coarse underlying shape of the surface of the object), but is noisy or lacks high frequency detail. The stereoscopic reconstruction uses optical triangulation, by geometrically correlating pairs of features in the respective stereo pair of images captured by the image capture devices 7, 8 to give the positions of each of the corresponding landmarks on the object 9 in a three-dimensional space defined based on the localization template 10. Note that this step is computationally expensive, and therefore time-consuming unless the system includes a fast processor, so certain embodiments may omit it in the interests of keeping steps 202 and 205 as close to each other in time as possible. Other embodiments may perform step 203 but forming a low-resolution 3D model, thereby keeping the computational cost low.

In step 204 the processor 322 uses the low intensity images to calculate an optimized intensity value (typically an intensity higher than the intensity with which the first images were captured in step 202) for capturing second images for each of the energy sources 1, 2, 3 (in step 205). Each of the energy sources has the same ratio of the optimized intensity value and the low intensity used in step 202. This ratio is referred to as the "energy intensity ratio". In fact, it may be that the low intensity used in step 202 is the same for all energy sources 1, 2, 3, in which case the optimized intensity value is the same for all the energy sources 1, 2, 3 also.

There are many ways in which the energy intensity ratio can be obtained within the scope of the invention, the invention being defined by the appended claims.

In one example, initially the processor 322 may form a combined image from the low intensity images. For example, each pixel of the combined image may have an intensity for each color which is the mean of the respective intensities for the corresponding color of the corresponding pixels of the three low intensity images. Or the combined image may have an intensity for each color which is the highest of the respective intensities for the corresponding color of the corresponding pixels of the three low intensity images. The processor 322 then combines the intensities for each color to obtain a single combined intensity value for each pixel. If optional step 203 was performed, the initial 3D model is used to identify pixels which are images of the background (i.e. not parts of the object 9), and such pixels are removed from consideration. For some of the remaining pixels, the combined intensity value is above a threshold, indicating that the corresponding points on the object ("bright areas") were adequately imaged in the low intensity images. These pixels are excluded, and the processor 322 then forms an average ("dark area intensity") of the combined intensities of the remaining pixels (corresponding to "dark areas" of the object). The processor 322 forms the optimized intensity value as a predefined function of the dark area intensity. The optimized intensity value is higher if the dark area intensity is lower. Thus, a low value for the dark area intensity may indicate that it is worth risking a higher value for the optimized intensity value, even though this risks over-exposure in the bright areas of the object, in order to ensure that darker areas of the object are properly imaged.

The scheme above may have a number of variations. Firstly, since some of the dark area pixels may actually be showing the background of the object (i.e. not the object itself), pixels of the low energy images which have a combined intensity below a second threshold may be excluded from the calculation of the dark area intensity. Second, the intensity of the bright area pixels may also be used in the calculation of the optimized intensity value, e.g. such that if the average intensity of the bright area pixels is higher, then optimized intensity value is chosen to be lower, to reduce over-exposure in the bright areas.

An alternative method for calculating the energy intensity ratio is based on the fact that the operator of the imaging system is likely to place the most important portion of the object 9 in the centre of the visual fields of the image capturing devices 7, 8. Accordingly, the processor 322 forms the optimized intensity value as a function of the respective intensities of the pixels in a central region of the visual fields of the image capturing devices 7, 8 ("central pixels"). The intensities input to the function may be the respective intensities of the central pixels in the low intensity images, or the respective intensities of the pixels in the combined image mentioned above. The function is chosen to try to ensure that in the second images the brightness of as many of these pixels as possible will be within a predefined optimal brightness range, which ensures that the corresponding portion of the object is correctly imaged.

Note that in a variation of the embodiment, step 204 is performed before step 203, or the two may be performed concurrently.

In step 205, the processor 322 controls the energy sources 1, 2, 3 to successively generate energy with an intensity according to the calculated respective optimized intensity value. While this is done, the image capturing device 8 captures three respective second images ("high intensity images"). Thus, the high intensity images and the low intensity images collectively provide reliable information about the reflectivity of both bright and dark areas of the object 9. Both the low intensity and high intensity images have intensity values at each pixel which are directly proportional to the level of energy emitted from the corresponding portion of the object 9 when the images were taken.

In step 206, the processor refines the initial 3D model obtained in step 203 using the high intensity and low intensity images. Alternatively, in embodiments in which step 203 was omitted, or in which it was performed to form a 3D model with low resolution, in step 206 a 3D model is calculated without reference to a previously calculated 3D model.

In either case, if there is a possibility that the object 9 moved relative to the imaging system in the time between the performance of steps 201, 202 and/or 205, motion compensation may be applied to take register the ambient light image, high intensity images and/or low intensity images in a common reference frame, for example using the localization template 10.

The intensity of the ambient light image is subtracted from both the high intensity and low intensity images, thereby removing the effects of ambient light.

The rest of step 206 may be performed using the photometric technique employed in WO 2009/122200 A1. The photometric reconstruction requires an approximating model of the surface material reflectivity properties. In the general case this may be modelled (at a single point on the surface) by the Bidirectional Reflectance Distribution Function (BRDF). A simplified model is typically used in order to render the problem tractable. One example is the Lambertian Cosine Law model. In this simple model the intensity of the surface as observed by the camera depends only on the quantity of incoming irradiant energy from the energy source and foreshortening effects due to surface geometry on the object. This may be expressed as:

$$I = P\rho \boldsymbol{L} \cdot \boldsymbol{N} \qquad \text{(Eqn 1)}$$

where $I$ represents the intensity observed by the image capture device 8 at a single point on the object 9, P the incoming irradiant light energy at that point, $\boldsymbol{N}$ the object-relative surface normal vector, $\boldsymbol{L}$ the normalized object-relative direction of the incoming lighting and $\rho$ the Lambertian reflectivity of the object at that point. Typically, variation in P and $\boldsymbol{L}$ is pre-known from a prior calibration step, or from knowledge of the position of the energy sources 1, 2, 3, and this (plus the knowledge that $\boldsymbol{N}$ is

normalized) makes it possible to recover both **N** and $\rho$ at each pixel. Since there are three degrees of freedom (two for **N** and one for $\rho$), intensity values *I* are needed for at least three directions **L** in order to uniquely determine both **N** and $\rho$. Note that typically only the single-source images captured by the image capturing device 8 are used in the photometry. This is why three energy sources 1, 2, 3 are provided. For a bright area pixel the processor 322 can use an intensity *I* which is calculated using the low intensity images, whereas for a dark area pixel the processor 322 can use an intensity *I* which is calculated using the high intensity images but taking into account that the value of P is higher in the high intensity images in accordance with the optimized intensity value.

The shape of the 3D model of the object 9 (i.e. the surface of the object) has now been completed. The remaining steps of the method 200 relate to forming colors and brightness levels for the points on the model, and displaying the model.

In step 207, the processor 322 works out the distance of each point on the refined model from each of the energy sources. Then for each point, and for each of the energy sources, it works out a corresponding compensation factor, which may for example be the square of the distance.

In step 208, the processor 322 calculates a color and brightness for each point on the model. For a point in the bright area of the object it does this by, for each color, adding the respective intensities of that color in each of the low intensity images multiplied by the respective compensation factor. For a point in a dark area of the object it does this by, for each color, adding the respective intensities of that color in each of the low intensity images multiplied by the respective compensation factor, and dividing the result by the optimized intensity factor. The result is a set of brightness values for each color and each point which accurately express the brightness of the point with the full dynamic range of the object 9.

In step 209, tone mapping is then used to produce a modified intensity value for each color with a smaller dynamic range. For example, a non-linear function may applied to the values obtained in step 208 (tone mapping). For example, if the brightness values obtained in step 208 have 16-bit accuracy, step 209 may produce a modified intensity value as a 8-bit number for each point and each color. An alternative to tone mapping is the "exposure fusion" technique proposed by Mertens et al in 2007 (see Computer Graphics Forum, Volume 28, Issue 1, pages 161-171, March 2009)

In step 210 an image of the 3D model is displayed, with each point having a brightness for each color which is based on the modified intensity value obtained in step 209.

Fig. 4 is a block diagram showing a technical architecture of the overall system 300 for performing the method.

The technical architecture includes a processor 322 (which may be referred to as a central processor unit or CPU) that is in communication with the cameras 7, 8, for controlling when they capture images and receiving the images. The processor 322 is further in communication with, and able to control the energy sources 1, 2, 3.

The processor 322 is also in communication with memory devices including secondary storage 324 (such as disk drives or memory cards), read only memory (ROM) 326, random access memory (RAM) 328. The processor 322 may be implemented as one or more CPU chips.

The system 200 includes a user interface (UI) 330 for controlling the processor 322. The UI 330 may comprise a touch screen, keyboard, keypad or other known input device. If the UI 330 comprises a touch screen, the processor 322 is operative to generate an image on the touch screen. Alternatively, the system may include a separate screen (not shown) for displaying images under the control of the processor 322.

The system 300 optionally further includes a unit 332 for forming 3D objects designed by the processor 322, such as a replica of the object 9 according to the 3D model. For example the unit 332 may take the form of a 3D printer. Alternatively, the system 200 may include a network interface for transmitting instructions for production of the objects to an external production device.

The secondary storage 324 is typically comprised of a memory card or other storage device and is used for non-volatile storage of data and as an over-flow data storage device if RAM 328 is not large enough to hold all working data. Secondary storage 324 may be used to store programs which are loaded into RAM 328 when such programs are selected for execution.

In this embodiment, the secondary storage 324 has an order generation component 324a, comprising non-transitory instructions operative by the processor 322 to perform various operations of the method of the present disclosure. The ROM 326 is used to store instructions and perhaps data which are read during program execution. The secondary storage 324, the RAM 328, and/or the ROM 326 may be referred to in some contexts as computer readable storage media and/or non-transitory computer readable media.

The processor 322 executes instructions, codes, computer programs, scripts which it accesses from hard disk, floppy disk, optical disk (these various disk based systems may all be considered secondary storage 324), flash drive, ROM 326, or RAM 328. While only one processor 322 is shown, multiple processors may be present. Thus, while instructions may be discussed as executed by a processor, the instructions may be executed simultaneously, serially, or otherwise executed by one or multiple processors.

In an alternative implementation of the invention, the method may be carried out by the image signal processor (ISP) associated with the camera chip of one of the image capturing devices.

In a further implementation of the invention, the method may be carried out by an integrated circuit such as a FPGA (field programmable gate array) for controlling the image capturing devices and light sources.

Whilst the foregoing description has described exemplary embodiments, it will be understood by those skilled in the art that many variations of the embodiment can be made within the scope of the attached claims.

**Claims**

1. An apparatus for computing a three-dimensional (3D) model of an object, comprising:

   at least one directional energy source arranged to generate electromagnetic radiation and to directionally illuminate the object from at least three directions;
   one or more energy sensors arranged to capture images of the object;
   a processor arranged to receive images captured by the energy sensors, and control the energy sources and the at least one energy sensor;
   the processor being arranged:

   (i) to control the at least one energy source and one or more energy sensors to capture, for each direction, a first image at a respective first time at which the at least one energy source illuminates the object from the respective direction with a first respective intensity level,
   (ii) to analyze the first images to obtain an energy intensity ratio;
   (iii) to control the at least one energy source and one or more energy sensors to capture, for each direction, a second image at a respective second time at which the at least one energy source generates energy at a second respective intensity level, the ratio of the second and first respective intensity levels being equal to the energy intensity ratio;
   (iv) to obtain photometric data using the first and second captured images; and
   (v) to generate the 3D model using the photometric data.

2. An apparatus according to claim 1 in which the first intensity level is the same for each of the directions; and/or in which the second intensity level is higher than the corresponding first intensity level.

3. An apparatus according claim 1 or claim 2 in which the processor is further arranged:

   (vi) to control at least one of the energy sensors to capture an ambient light image of the object at a time when the at least one energy source is not illuminating the object, and
   (vii) to subtract the ambient light image from the captured images.

4. An apparatus according to any preceding claim in which the processor is arranged to generate the 3D model by:

   generating an initial 3D model of the object; and
   refining the initial 3D model using the photometric data.

5. An apparatus according to any preceding claim in which the processor is operative:

   to generate, for a plurality of points on the model, at least one corresponding brightness value using the captured images; and
   to display an image of the model with respective points on the model having a brightness dependent upon the at least one corresponding brightness value.

6. An apparatus according to claim 5 in which:

   the energy sensors are operative to capture said images with respective intensity values at each pixel for each of a plurality of colors; and
   for each of the points on the model, there is a corresponding said brightness value for each of the plurality of colors.

7. An apparatus according to claim 6 in which the processor is arranged to generate the brightness values by, for each said point on the model:

   for some or all of the energy sources, obtaining a corresponding compensation factor indicative of the distance between the energy source and the point on the model;
   deriving the brightness value by combining intensity values of pixels of the captured images corresponding to the point on the model, the intensity values being weighted by the corresponding compensation factor;
   and preferably, in which the brightness of each point of the models is a modified intensity value obtained from the captured images using a dynamic range reduction algorithm, said dynamic range reduction preferably being tone mapping.

8. A method for computing a three-dimensional (3D) model of an object using at least one directional energy source arranged to directionally illuminate the object from at least three directions and using one or more energy sensors arranged to capture images of the object, the method comprising:

(a) controlling the at least one energy source and one or more energy sensors to capture, for each direction, a first image at a respective first time at which the at least one energy source illuminates the object from the respective direction with a first respective intensity level;

(b) analyzing the first images to obtain an energy intensity ratio;

(c) controlling the at least one energy source and one or more energy sensors to capture, for each direction, a second image at a respective second time at which the at least one energy source generates energy at a second respective intensity level, the ratio of the second and first respective intensity levels being equal to the energy intensity ratio;

(d) obtaining photometric data using the captured images; and

(e) generating the 3D model using the photometric data.

9. A method according to claim 8 in which the first intensity level is the same for each of the directions.

10. A method according to claim 8 or claim 9 in which the subset of the images includes corresponding images for each of the directions captured when the at least one energy source is generating energy at the respective first intensity level, the second respective intensity level being higher than the first said intensity level.

11. A method according to any of claims 8 to 10 further including:

capturing an ambient light image of the object at a time when the at least one energy source is not illuminating the object, and

subtracting the ambient light image from the images captured when the object is illuminated by the at least one energy source.

12. A method according to any of claims 8 to 11, in which said step (c) is performed by:

generating an initial 3D model of the object;

refining the initial 3D model using the photometric data;

and preferably in which the initial 3D model is formed by

capturing images of the object from multiple respective viewpoints, and analyzing the images captured from multiple respective inputs stereoscopically.

13. A method according to any of claims 8 to 12 further comprising:

(f) generating, for a plurality of points on the model, at least one corresponding brightness value using the captured images; and

(g) displaying an image of the model with respective points on the model having a brightness dependent upon the at least one corresponding brightness value.

14. A method according to claim 13 in which:

said images include respective intensity values at each pixel for each of a plurality of colors; and for each of the points on the model, there is a corresponding said brightness value for each of the plurality of colors.

15. A method according to claim 13 or claim 14 in which step (f) is performed, for each said point on the model:

for some or all of the energy sources, obtaining a corresponding compensation factor indicative of the distance between the energy source and the point on the model; and

deriving the brightness level by combining intensity values of pixels of the captured images corresponding to the point on the model, the intensity values being weighted by the corresponding compensation factor;

and preferably in which the brightness of each point of the models is a modified intensity value obtained from the captured images using a dynamic range reduction algorithm, said dynamic range reduction preferably being tone mapping.

**Patentansprüche**

1. Vorrichtung zum Berechnen eines dreidimensionalen (3D) Modells eines Gegenstands, umfassend:

mindestens eine direktionale Energiequelle, die derart angeordnet ist, dass sie elektromagnetische Strahlung erzeugt und den Gegenstand aus mindestens drei Richtungen direktional beleuchtet,

einen oder mehrere Energiesensoren, die derart angeordnet sind, dass sie Bilder des Gegenstands aufnehmen,

einen Prozessor, der derart angeordnet ist, dass er die von den Energiesensoren erfassten Bilder empfängt und die Energiequellen sowie den mindestens einen Energiesensor steuert,

wobei der Prozessor derart angeordnet ist, dass er:

(i) die mindestens eine Energiequelle und einen oder mehrere Energiesensoren ansteuert, um für jede Richtung ein erstes Bild zu einem jeweiligen ersten Zeitpunkt aufzunehmen, zu dem die mindestens eine Energiequelle den Gegenstand aus der jeweiligen Richtung mit einer ersten jeweiligen Intensitätsstufe beleuchtet,

(ii) die ersten Bilder analysiert, um ein Energieintensitätsverhältnis zu ermitteln,

(iii) die mindestens eine Energiequelle und einen oder mehrere Energiesensoren ansteuert, um für jede Richtung ein zweites Bild zu einem jeweiligen zweiten Zeitpunkt aufzunehmen, zu dem die mindestens eine Energiequelle auf einer zweiten jeweiligen Intensitätsstufe Energie erzeugt, wobei das Verhältnis der zweiten jeweiligen Intensitätsstufe und der ersten jeweiligen Intensitätsstufe gleich dem Energieintensitätsverhältnis ist,

(iv) anhand der ersten und zweiten aufgenommenen Bilder photometrische Daten erfasst und

(v) das 3D-Modell anhand der photometrischen Daten erstellt.

2. Vorrichtung nach Anspruch 1, wobei die erste Intensitätsstufe für jede der Richtungen gleich ist, und/oder wobei die zweite Intensitätsstufe höher ist als die entsprechende erste Intensitätsstufe.

3. Vorrichtung nach Anspruch 1 oder Anspruch 2, wobei der Prozessor ferner derart angeordnet ist, dass:

(vi) er mindestens einen der Energiesensoren ansteuert, um ein Umgebungslichtbild des Gegenstands zu einem Zeitpunkt aufnimmt, zu dem die mindestens eine Energiequelle den Gegenstand nicht beleuchtet, und

(vii) das Umgebungslichtbild von den aufgenommenen Bildern subtrahiert.

4. Vorrichtung nach einem der vorstehenden Ansprüche, wobei der Prozessor derart angeordnet ist, dass er das 3D-Modell erstellt durch:

Erstellen eines 3D-Ausgangsmodells des Gegenstands und

Verfeinern des 3D-Ausgangsmodells anhand der photometrischen Daten.

5. Vorrichtung nach einem der vorstehenden Ansprüche, wobei der Prozessor in Betrieb:

für eine Mehrzahl Punkte am Modell mindestens einen entsprechenden Helligkeitswert anhand der aufgenommenen Bilder erzeugt und

ein Bild des Modells anzeigt, wobei jeweilige Punkte am Modell eine Helligkeit aufweisen, die vom mindestens einen entsprechenden Helligkeitswert abhängt.

6. Vorrichtung nach Anspruch 5, wobei

die Energiesensoren in Betrieb die Bilder mit jeweiligen Intensitätswerten in jedem Pixel für jede einer Mehrzahl Farben aufnehmen und

es für jeden der Punkte am Modell einen entsprechenden Helligkeitswert für jede der Mehrzahl Farben gibt.

7. Vorrichtung nach Anspruch 6, wobei der Prozessor derart angeordnet ist, dass er die Helligkeitswerte erzeugt, indem er für jeden der Punkte am Modell:

für einige oder alle der Energiequellen einen entsprechenden Ausgleichsfaktor ermittelt, der Aufschluss über den Abstand zwischen der Energiequelle und dem Punkt am Modell ergibt,

den Helligkeitswert durch Kombinieren der Intensitätswerte von Pixeln der aufgenommenen Bilder, die dem Punkt am Modell entsprechen, herleitet, wobei die Intensitätswerte durch den entsprechenden Ausgleichsfaktor gewichtet werden,

und vorzugsweise wobei die Helligkeit jedes Punktes der Modelle ein modifizierter Intensitätswert, der aus den aufgenommenen Bildern mit einem Dynamikbereichreduktionsalgorithmus ermittelt wurde, wobei es sich bei der Dynamikbereichreduktion vorzugsweise um Tone Mapping handelt.

8. Verfahren zum Berechnen eines dreidimensionalen (3D) Modells eines Gegenstands mit mindestens einer direktionalen Energiequelle, die derart angeordnet ist, dass sie den Gegenstand aus mindestens drei Richtungen direktional beleuchtet, und mit einem oder mehreren Energiesensoren, die derart angeordnet sind, dass sie Bilder des Gegenstands aufnehmen, wobei das Verfahren umfasst:

(a) Ansteuern der mindestens einen Energiequelle und des einen oder der mehreren Energiesensoren, um für jede Richtung ein erstes Bild zu einem jeweiligen ersten Zeitpunkt aufzunehmen, zu dem die mindestens eine Energiequelle den Gegenstand aus der jeweiligen Richtung mit einer ersten jeweiligen Intensitätsstufe beleuchtet,

(b) Analysieren der ersten Bilder, um ein Energieintensitätsverhältnis zu ermitteln,

(c) Ansteuern der mindestens einen Energiequelle und des mindestens einen Energiesensors, um für jede Richtung ein zweites Bild zu einem jeweiligen zweiten Zeitpunkt aufzunehmen, zu dem die mindestens eine Energiequelle auf einer zweiten jeweiligen Intensitätsstufe Energie erzeugt, wobei das Verhältnis der zweiten jeweiligen Intensitätsstufe und der ersten jeweiligen Intensitätsstufe gleich dem Energieintensitätsverhältnis ist,

(d) Erfassen photometrischer Daten anhand der aufgenommenen Bilder und

(e) Erstellen des 3D-Modells anhand der photometrischen Daten.

9. Verfahren nach Anspruch 8, wobei die erste Intensitätsstufe für jede der Richtungen gleich ist.

10. Verfahren nach Anspruch 8 oder Anspruch 9, wobei die Teilmenge der Bilder entsprechende Bilder für jede der erfassten Richtungen umfasst, wenn die mindestens eine Energiequelle Energie auf der jeweiligen ersten Intensitätsstufe erzeugt, wobei die zweite jeweilige Intensitätsstufe höher ist als die erste Intensitätsstufe.

11. Verfahren nach einem der Ansprüche 8 bis 10, ferner umfassend:

Aufnehmen eines Umgebungslichtbilds des Gegenstands zu einem Zeitpunkt, wenn die mindestens eine Energiequelle den Gegenstand nicht beleuchtet, und

Subtrahieren des Umgebungslichtbilds von den Bildern, die erfasst werden, wenn der Gegenstand von der mindestens einen Energiequelle beleuchtet wird.

12. Verfahren nach einem der Ansprüche 8 bis 11, wobei der Schritt (c) ausgeführt wird durch:

Erstellen eines 3D-Ausgangsmodells des Gegenstands,

Verfeinern des 3D-Ausgangsmodells anhand der photometrischen Daten und vorzugsweise wobei das 3D-Ausgangsmodell gebildet wird durch

Erfassen von Bildern des Gegenstands aus mehreren jeweiligen Blickwinkeln und stereoskopisches Analysieren der aufgenommenen Bilder aus mehreren jeweiligen Eingaben,

13. Verfahren nach einem der Ansprüche 8 bis 12, ferner umfassend:

(f) für eine Mehrzahl Punkte am Modell: Erzeugen mindestens eines entsprechenden Helligkeitswerts anhand der aufgenommenen Bilder und

(g) Anzeigen eines Bilds des Modells, wobei jeweilige Punkte am Modell eine Helligkeit aufweisen, die vom mindestens einen entsprechenden Helligkeitswert abhängt.

14. Verfahren nach Anspruch 13, wobei:

die Bilder jeweilige Intensitätswerte an jedem Pixel für jede einer Mehrzahl Farben umfassen und

es für jeden der Punkte am Modell einen entsprechenden Helligkeitswert für jede der Mehrzahl Farben gibt.

15. Verfahren nach Anspruch 13 oder Anspruch 14, wobei der Schritt (f) für jeden Punkt am Modell ausgeführt wird:

für einige oder alle der Energiequellen einen entsprechenden Ausgleichsfaktor ermittelt, der Aufschluss über den Abstand zwischen der Energiequelle und dem Punkt am Modell ergibt, und

Herleiten der Helligkeitsstufe durch Kombinieren der Intensitätswerte von Pixeln der aufgenommenen Bilder, die dem Punkt am Modell entsprechen, wobei die Intensitätswerte durch den entsprechenden Ausgleichsfaktor gewichtet werden,

und vorzugsweise wobei die Helligkeit jedes Punktes der Modelle ein modifizierter Intensitätswert, der aus den aufgenommenen Bildern mit einem Dynamikbereichreduktionsalgorithmus ermittelt wurde, wobei es sich bei der Dynamikbereichreduktion vorzugsweise um Tone Mapping handelt.

**Revendications**

1. Appareil pour calculer un modèle en trois dimensions (3D) d'un objet, comprenant :

au moins une source d'énergie directionnelle qui est agencée de manière à ce qu'elle génère un rayonnement électromagnétique et à ce qu'elle éclaire directionnellement l'objet depuis au moins trois directions ;

un ou plusieurs capteurs d'énergie qui sont agencés de manière à ce qu'ils capturent des images de l'objet ;

un processeur qui est agencé de manière à ce qu'il reçoive les images qui sont capturées par les capteurs d'énergie et à ce qu'il commande les sources d'énergie et l'au moins un capteur d'énergie ;

le processeur étant agencé de manière à ce qu'il réalise les actions qui suivent :

(i) la commande de l'au moins une source d'énergie et des un ou plusieurs capteurs d'énergie de manière à capturer, pour chaque direction, une première image à un premier instant respectif auquel l'au moins une source d'énergie éclaire l'objet depuis la direction respective selon un premier niveau d'intensité respectif ;

(ii) l'analyse des premières images de manière à obtenir un rapport d'intensités d'énergie ;

(iii) la commande de l'au moins une source d'énergie et des un ou plusieurs capteurs d'énergie de manière à capturer, pour chaque direction, une seconde image à un second instant respectif auquel l'au moins une source d'énergie génère de l'énergie à un second niveau d'intensité respectif, le rapport des second et premier niveaux d'intensité respectifs étant égal au rapport d'intensités d'énergie ;

(iv) l'obtention de données photométriques en utilisant les première et seconde images capturées ; et

(v) la génération du modèle 3D en utilisant les données photométriques.

2. Appareil selon la revendication 1, dans lequel le premier niveau d'intensité est le même pour chacune des directions ; et/ou dans lequel le second niveau d'intensité est plus élevé que le premier niveau d'intensité correspondant.

3. Appareil selon la revendication 1 ou la revendication 2, dans lequel le processeur est en outre agencé de manière à ce qu'il réalise les actions qui suivent :

(vi) la commande d'au moins l'un des capteurs d'énergie de manière à ce qu'il capture une image lumineuse ambiante de l'objet à un instant auquel l'au moins une source d'énergie n'est pas en train d'éclairer l'objet ; et

(vii) la soustraction de l'image lumineuse ambiante vis-à-vis des images capturées.

4. Appareil selon l'une quelconque des revendications qui précèdent, dans lequel le processeur est agencé de manière à ce qu'il génère le modèle 3D en réalisant les actions qui suivent :

la génération d'un modèle 3D initial de l'objet ; et l'affinage du modèle 3D initial en utilisant les données photométriques.

5. Appareil selon l'une quelconque des revendications qui précèdent, dans lequel le processeur est opérationnel pour réaliser les actions qui suivent :

la génération, pour une pluralité de points sur le modèle, d'au moins une valeur de luminosité correspondante en utilisant les images capturées ; et

l'affichage d'une image du modèle avec des points respectifs sur le modèle qui présentent une luminosité qui dépend de l'au moins une valeur de luminosité correspondante.

6. Appareil selon la revendication 5, dans lequel :

les capteurs d'énergie sont opérationnels pour capturer lesdites images selon des valeurs d'intensité respectives au niveau de chaque pixel pour chacune d'une pluralité de couleurs ; et pour chacun des points sur le modèle, il y a une dite valeur de luminosité correspondante pour chacune de la pluralité de couleurs.

7. Appareil selon la revendication 6, dans lequel le processeur est agencé de manière à ce qu'il génère les valeurs de luminosité en réalisant les actions qui suivent, pour chaque dit point sur le modèle :

pour certaines des sources d'énergie, voire pour toutes, l'obtention d'un facteur de compensation correspondant qui est indicatif de la distance entre la source d'énergie et le point sur le modèle ; et la dérivation de la valeur de luminosité en combinant des valeurs d'intensité de pixels des images capturées qui correspondent au point sur le modèle, les valeurs d'intensité étant pondérées par le facteur de compensation correspondant ;

et de préférence, dans lequel la luminosité de chaque point des modèles est une valeur d'intensité modifiée qui est obtenue à partir des images capturées en utilisant un algorithme de réduction de plage dynamique, ladite réduction de plage dynamique étant de préférence une cartographie de nuances de teintes.

8. Procédé pour calculer un modèle en trois dimensions (3D) d'un objet en utilisant au moins une source d'énergie directionnelle qui est agencée de manière à ce qu'elle éclaire directionnellement l'objet depuis au moins trois directions et en utilisant un ou plusieurs capteurs d'énergie qui sont agencés de manière à ce qu'ils capturent des images de l'objet, le procédé comprenant :

(a) la commande de l'au moins une source d'énergie et des un ou plusieurs capteurs d'énergie de manière à capturer, pour chaque direction, une première image à un premier instant respectif auquel l'au moins une source d'énergie éclaire l'objet depuis la direction respective selon un premier niveau d'intensité respectif ;

(b) l'analyse des premières images de manière à obtenir un rapport d'intensités d'énergie ;

(c) la commande de l'au moins une source d'énergie et des un ou plusieurs capteurs d'énergie de manière à capturer, pour chaque direction, une seconde image à un second instant respectif auquel l'au moins une source d'énergie génère de l'énergie à un second niveau d'intensité respectif, le rapport des second et premier niveaux d'intensité respectifs étant égal au rapport d'intensités d'énergie ;
(d) l'obtention de données photométriques en utilisant les images capturées ; et
(e) la génération du modèle 3D en utilisant les données photométriques.

9. Procédé selon la revendication 8, dans lequel le premier niveau d'intensité est le même pour chacune des directions.

10. Procédé selon la revendication 8 ou la revendication 9, dans lequel le sous-jeu des images inclut des images se correspondant pour chacune des directions qui sont capturées lorsque l'au moins une source d'énergie est en train de générer de l'énergie au premier niveau d'intensité respectif, le second niveau d'intensité respectif étant plus élevé que le premier dit niveau d'intensité.

11. Procédé selon l'une quelconque des revendications 8 à 10, incluant en outre :

la capture d'une image lumineuse ambiante de l'objet à un instant auquel l'au moins une source d'énergie n'est pas en train d'éclairer l'objet ; et
la soustraction de l'image lumineuse ambiante vis-à-vis des images capturées lorsque l'objet est éclairé par l'au moins une source d'énergie.

12. Procédé selon l'une quelconque des revendications 8 à 11, dans lequel ladite étape (c) est effectuée en réalisant les actions qui suivent :

la génération d'un modèle 3D initial de l'objet ;
l'affinage du modèle 3D initial en utilisant les données photométriques ;
et de préférence, dans lequel le modèle 3D initial est formé en réalisant l'action qui suit :
la capture d'images de l'objet depuis de multiples points de vue respectifs et l'analyse des images capturées à partir de multiples entrées respectives de façon stéréoscopique.

13. Procédé selon l'une quelconque des revendications 8 à 12, comprenant en outre :

(f) la génération, pour une pluralité de points sur le modèle, d'au moins une valeur de luminosité correspondante en utilisant les images capturées ; et
(g) l'affichage d'une image du modèle avec des points respectifs sur le modèle qui présentent une luminosité qui dépend de l'au moins une valeur de luminosité correspondante.

14. Procédé selon la revendication 13, dans lequel :

lesdites images incluent des valeurs d'intensité respectives au niveau de chaque pixel pour chacune d'une pluralité de couleurs ; et
pour chacun des points sur le modèle, il y a une dite valeur de luminosité correspondante pour chacune de la pluralité de couleurs.

15. Procédé selon la revendication 13 ou la revendication 14, dans lequel l'étape (f) est effectuée, pour chaque dit point sur le modèle, en réalisant les actions qui suivent :

pour certaines des sources d'énergie, voire pour toutes, l'obtention d'un facteur de compensation correspondant qui est indicatif de la distance entre la source d'énergie et le point sur le modèle ; et
la dérivation du niveau de luminosité en combinant des valeurs d'intensité de pixels des images capturées qui correspondent au point sur le modèle, les valeurs d'intensité étant pondérées par le facteur de compensation correspondant ; et de préférence, dans lequel la luminosité de chaque point des modèles est une valeur d'intensité modifiée qui est obtenue à partir des images capturées en utilisant un algorithme de réduction de plage dynamique, ladite réduction de plage dynamique étant de préférence une cartographie de nuances de teintes.

Fig. 1

Fig. 2

200

201

Capture ambient light image

202

Activate directional energy sources in turn, and capture low intensity images, including a stereo pair of images

203

Calculate initial 3D model

Calculate optimized intensity value

204

205

Activate directional energy sources in turn according to the optimal intensity value, and capture high intensity images.

206

Calculate or refine the initial model using the high and low intensity images

207

For each energy source, obtain compensation factor for points on the model

Produce brightness for each color and each point on the model

208

Apply tone mapping

209

210

Display image of 3D model

Fig. 3

300

UI 330

Camera 7

Camera 8

Energy source 2

Energy source 1

Secondary Storage
324

324a

CPU
322

RAM
328

ROM
326

Energy source 3

Object production device 332

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009122200 A1
- WO 2014187917 A1

**Non-patent literature cited in the description**

- *Computer Graphics Forum,* March 2009, vol. 28 (1), 161-171